# EUROPEAN PATENT APPLICATION

(11) **EP 1 515 356 A1**
(43) Date of publication of application: **16.03.2005**
(21) Application number: 03077902.9
(22) Date of filing: 15.09.2003
(51) Int. Cl.: H01J 29/70, H04N 3/23

(54) **Device for displaying television pictures including a deflection unit therefor**

(71) Applicant: LG Philips Displays, 5651 CA Eindhoven (NL)
(72) Inventor: Sluyterman, Albertus Aemilius Seyno, 5651 CA Eindhoven (NL)

(57) **Abstract**

A display tube has an envelope (10) comprising a neck (14). In the neck (14) there is an in-line electron gun (15). A deflection unit which is provided around the envelope (10) comprising a frame deflection coil system (27). The device comprises a neck coil system (50) situated around the neck (14) for generating a magnetic field comprising a dipolar field component for deflection of the electron beams (19, 20, 21) in a (y) direction transverse to the in-line plane, and means for supplying a current (I₅₀) to the neck coil system (50) which is a non-linear function of the frame deflection current (I₂₇) for reducing inner-pincushion raster distortion.

## Description

### FIELD OF THE INVENTION

The invention relates to a device for displaying television pictures comprising a display tube having an envelope comprising a neck and a screen, in the neck of which an in-line electron gun is present for generating three electron beams situated in an in-line plane, and comprising an electro-magnetic deflection unit which is provided around the envelope of the display tube and comprises a first deflection coil system for deflecting the beam in a line direction and a second deflection coil system for deflection the beam in a frame direction transverse to the line direction, the device comprising means for supplying a line deflection current and a frame direction current to the first and second deflection coil system respectively.

Color display tubes are used in which three electron guns which are spatially separated from each other are situated on one line. Such a display tube is known as an in-line color display tube. Such an in-line color display tube comprises in the neck an in-line electron gun. In the in-line color display tube a deflection unit is used which comprises deflection coils which give such an inhomogeneous field distribution that the beams of the electron guns upon deflection coincide over the whole screen. For that purpose in particular the line deflection field (generated by the first deflection coil) on the gun side of the deflection yoke should be barrel-shaped and should be pincushion-shaped towards the screen side and, just conversely, the frame deflection field (generated by the second deflection coil) on the gun side should be pincushion-shaped and should be barrel-shaped more towards the screen side.

The extent of pincushion-shape and barrel-shape is such that upon deflection the convergence errors of the electron beams generated by the electron gun are corrected so that pictures having satisfying convergence properties can be produced on the screen of the display tube. Display tube deflection yoke combinations of this type are called self-converging.

When in this manner the convergence is ensured (for that purpose the deflection coils often are combined with auxiliary means for intensifying the pincushion shape and/or barrel shape of the deflection fields, which auxiliary means are, for example, plates of soft-magnetic metallic material placed in the deflection fields) a disturbing raster distortion (east-west frame distortion) often occurs on the vertical sides of the display screen and has to be corrected. Such correction is possible by careful designing of the deflection unit. However, for a CRT with a deflection angle of 120° or more (although the problem also occurs at smaller angles, but to smaller degree), the problem arises that the raster may be made straight along the edges of the screen (the raster is then made straight along the East/West edges by e.g. electronic means to counteract the disturbing raster distortion) but is visibly not straight in the inner area of the screen. This distortions are herein denoted, by the inventors, as the inner-pincushion raster distortion problem or more general as the pincushion raster distortion problem.
In the design of the deflection unit, it is possible to move the inner-pincushion raster problem from east-west to north-south or the other way around or to move the inner-pin-cushion problem to the outer sides of the screen, i.e. make the raster straight in the centre and half way up the screen, but then distortions in the form of barrel distortions are visible at the edges (North-South) of the screen. To some extend also a careful design of the inner surface of the screen can help to lessen these problems. However, adequately solving the problem is very difficult because there are also many other requirements imposed on the deflection unit (convergence, sensitivity etc.). This holds in particular for CRTs with large deflection angles.

### SUMMARY OF THE INVENTION

It is therefore an object of the invention to provide a relatively simple means to reduce the inner-pincushion raster distortion problems.

This object is achieved in that the device comprises a neck coil system situated around the neck for generating a magnetic field comprising a dipolar field component for deflection of the electron beams in a direction transverse to the in-line plane, and means for supplying a current to the neck coil system which is a non-linear function of the frame deflection current for reducing inner-pincushion raster distortion.

The neck coil system is provided before the actual deflection takes place, i.e. it is situated around the neck in front of (seen from the electron gun) the deflection coils of the deflection unit. By means of the neck coil system in operation an electro-magnetic field is generated which comprises a dipolar electro-magnetic field for deflection of the electron beams in a direction transverse to the in-line plane. The current going through the neck coil system is a function of the frame deflection current, however, not a linear function, but a non-linear function, i.e. the strength of the dipole is dependent on the deflection but not linearly dependent.
The basic insight on which the invention is based is the following:
When a horizontal line is vertically shifted by means of the neck coil system, this shifted line becomes curved due to the focusing effect of the line coil field.
The deflection system provides a deflection field which, although usually of high quality, has the problem of inner-pincushion raster distortions. These distortions are more prominent at certain parts of the screen, e.g. invisible at the centre and at the North-South edge, but clearly visible half-way up the screen. The neck coil system provides, due to its position, a simple counteracting action. The deflection field of the deflection units curves the lines in one direction, the neck coil system curves the lines in an opposite direction, due to the effect explained above, so that the lines become (more) straight. The curvature caused by the neck coil system is a function of the frame deflection current (the frame deflection direction is in normal CRTs the vertical direction). However, the inner-pin-cushion raster distortions are not a simple function of the frame deflection, the distortion is more prominent at some parts then at others, i.e. there is a non-linear behaviour in the inner-pincushion distortions. By providing the neck coils system with a current that is a non-linear function of the frame deflection such non-linear effects may be better counteracted so that the neck coil system enables an improved straightening of the lines.

An embodiment of the device in accordance with the invention is characterised in that the deflection unit in operation generates lines wherein the curvature of the lines as a function of deflection initially increases and then decreases, and in that means for supplying the current through the neck coil system are arranged to supply a current which, as a function of the frame deflection current, increases up to a maximum and then decreases to a minimum.

In a preferred embodiment the minimum is substantially zero.

As described above, it is possible to provide a deflection unit so that the lines are straight (zero distortion) at the edges, but curved (inner-pincushion distortion) halfway up the screen. By providing a current through the neck coil systems corresponding to this dependence of the pincushion distortion, i.e. rising to a maximum and decreasing again, the lines may be made more straight.

Another embodiment of the device in accordance with the invention is characterised in that the deflection unit generates in operation lines wherein the curvature increases as a function of frame deflection levelling at a certain maximum and in that means for supplying the current through the neck coil system are arranged to supply a current which, as a function of the frame deflection current, increases up to a maximum and then levels.

It is possible to make a deflection unit in which the pin-cushion distortion initially increase as a function of deflection, levelling out a certain value. By providing a current through the neck coil systems corresponding to this dependence of the pincushion distortion, i.e. rising to a maximum and then levelling at a certain value as a function of the frame deflection, the lines may be made more straight.

In yet another embodiment the deflection unit in operation generates lines wherein the curvature of the lines as a function of frame deflection increases first slowly and then increases more sharply, and the means for supplying the current through the neck coil system are arranged to supply a current which, as a function of the frame deflection current, remains substantially to a point or increase slowly to that point and then decreases more sharply to a maximum.

In a preferred embodiment the current through the neck coil system is substantially a third order function (I³) of the frame deflection current.

### BRIEF DESCRIPTION OF THE DRAWING

An embodiment of the invention will be described in greater detail with reference to the drawing.
FIG. 1 is a diagrammatic cross-sectional view through a color television display tube on which a deflection unit has been assembled.
FIG. 2A shows a diagrammatically cross-sectional view through a color television display tube in accordance with the invention.
FIG. 2B shows schematically a neck coil system in accordance with the invention.
FIG. 3 and 4 illustrate raster distortions, wherein FIG. 4 shows the effect a linear driving of the neck coil system, and figure 3 illustrates the inner-pincushion problem.
FIG. 5A and 5B illustrate a type of inner-pincushion correction (Fig. 5A) and a current (Fig. 5B) through the neck coil system to obtain such a correction.
FIG. 6A and 6B illustrate a type of inner-pincushion distortion (Fig. 6A) and a current (Fig. 6B) through the neck coil system to counteract such distortion.
FIG. 7A and 7B illustrate a type of inner-pincushion distortion (Fig. 7A) and a current (Fig. 7B) through the neck coil system to counteract such distortion.
FIG. 8A and 8B illustrate a current through the neck coil system (FIG. 8A) and a circuit arrangement (Fig. 8B) to provide such a current.
FIG. 9A and 9B illustrate a current through the neck coil system (FIG. 9A) and a circuit arrangement (Fig. 9B) to provide such a current.
FIG. 10A and 10B illustrate a current through the neck coil system (FIG. 10A) and a circuit arrangement (Fig. 10B) to provide such a current.

### DESCRIPTION OF THE PREFERRED EMBODIMENT

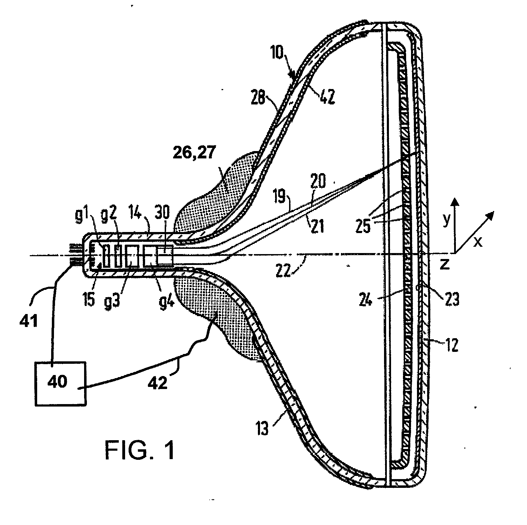

The color cathode ray tube shown in FIG. 1 comprises a glass envelope 10 which is composed of a display window 12, a cone 13 and a neck 14. An electron gun system 15 is provided in the neck 14, which system comprises an in-line electron gun formed by separate cathodes and a number of unitary grid electrodes g1, g2, g3 and g4 juxtapositioned by glass beads. The electron gun system 15 generates three electron beams 19, 20 and 21, respectively, with their axes situated in one plane (the plane of the drawing) which plane for convenience of description is termed the east-west plane. In the electron gun system 15 the axis of the central electron beam 20 coincides with the tube axis 22. The display window 12 comprises on its inside a plurality of triplets of phosphor lines. Each triplet comprises a line consisting of a blue-luminescing phosphor, a line consisting of a green-luminescing phosphor, and a line consisting of a red-luminescing phosphor. All the triplets together constitute the display screen 23. The phosphor lines are substantially perpendicular to the plane of the drawing. Positioned in front of the display screen 23 is a shadow mask 24 in which a plurality of elongate apertures are provided through which the electron beams 19,20 and 21 pass and impinge only upon phosphor lines of one colour. The three electron beams situated in one plane are deflected by a deflection comprising line deflection coils 26 and frame deflection coils 27 for deflection the electron beam in a line (x) direction respectively a frame (y) direction transverse to the line direction. A means (e.g. electronic means) 40 is provided for supplying (via lines 41, 42) the gun and the deflection unit with appropriate voltages and currents.

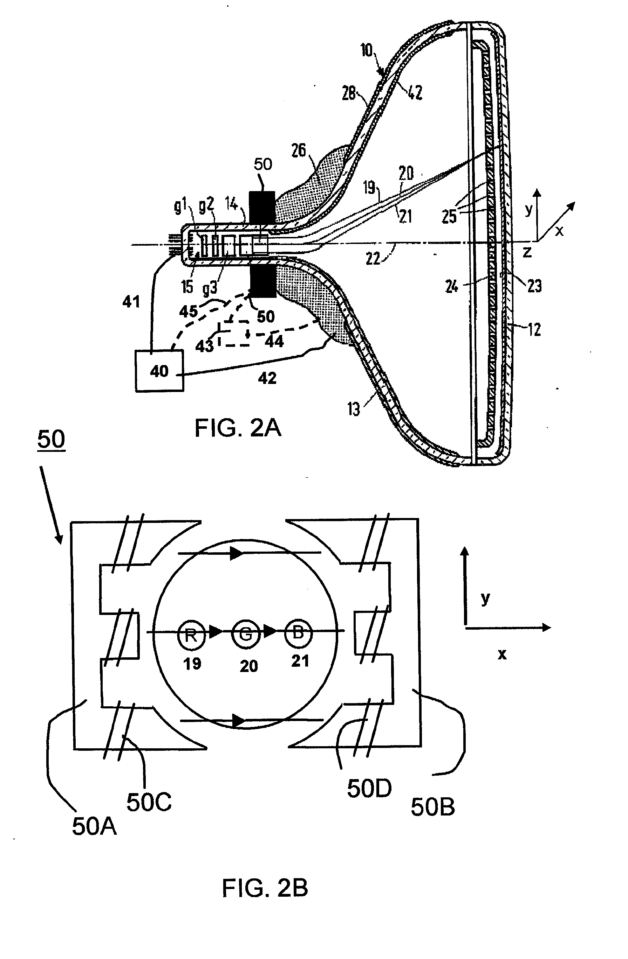

Fig. 2A illustrates a device in accordance with the invention. In comparison to Fig. 1 a neck coil system 50 is added. This system is provided around the neck at or near the neck-facing end of the deflection unit. At such positions the electron beams are not or substantially not deflected. The neck coil system 50 is fed with current via line 45, or the coil system is coupled to the line deflection coil 26 via line 44 and circuit 43.

Fig. 2B illustrates a neck coil system in accordance with embodiments of the invention.

The extra deflection coil is basically a dipole coil, giving the same vertical deflection to all three beams. Such a coil can e.g. be made as a small saddle-shaped coil.

Also a foil coil (a coil printed on a foil wrapped around the neck) could be used, although power dissipation is a matter of concern in a foil coil.

A third possible embodiment is to use E cores as shown in the figure 2B. Such an E-core comprises two cores 50A and 50B positioned at opposing sides of the neck. The figure shows also the x-direction, the in-line plane (the plane through the RGB electron beams (19, 20, 21). It also shows that the field lines of the field generated by the neck coil system 50 are oriented substantially east-west (along the x-direction) thereby creating a field with a strong dipolar component for deflection the electron beams north-south (along the y-direction, i.e. transverse to the in-line plane). Windings 50C and 50D are wound around the legs of the E cores.

For the coil 50C and 50D on these E cores, the number of windings is preferably the same for the four outer legs, while the number of turns on the inner legs is tuned such that a uniform deflection of the three beams occurs.

Note however, that one might chose to make the field of the neck coil to comprise besides a dipolar field component for deflection all electron beams equally, a six pole component in order to introduce some difference in the deflection of the individual electron beams..

The following figures illustrate the basic insight of the invention.

Referring back to FIG. 1 it should be pointed out that in the case of a self-converging system of a display tube 1 having a deflection unit 6 the line deflection field to be generated by the line deflection coil units 7, 8 should in known manner be pincushion-shaped on the side facing the display screen 4 and should be barrel-shaped on the side facing the electron gun system 3, to provide a self-convergent deflection system.

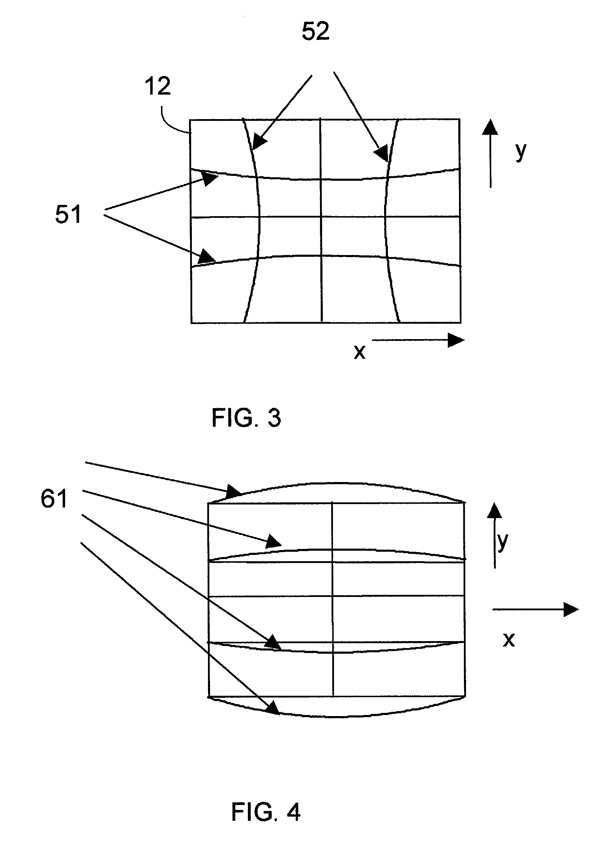

When designing a CRT with a deflection angle of 120° or more, the problem may arise that the raster may be straight along the edges of the screen (the raster is often made straight along the East/West edges by electronic means) but is not straight in the inner area of the screen. This is shown in figure 3. The lines are straight along the edges 12 of the screen, but curved (see lines 51, 52) half way up or sideways on the screen.
In the design of the deflection unit, it is possible to move the inner-pincushion problem from east-west to north-south or the other way around, i.e. to straighten lines 52, at the cost of an increased curvature of lines 51. To some extend also the inner surface of the screen can help to solve these problems. However, completely solving the problem is very difficult because there are also many other requirements imposed on the deflection unit (convergence, sensitivity etc.). This holds in particular for CRTs with large deflection angles.
The invention provides the concept of correcting the North/South inner pin distortion, by means of an additional neck coil and for some embodiments simple passive circuit are given below.

The invention is based on the following insight: When an additional deflection coil 50 is positioned around the neck 14 behind (see from the screen) the deflection unit 26, 27, and with extra vertical deflection is in operation generated with this coil, this extra deflection hardly exists along the east west edges of the screen. This is shown in figure 4 illustrating the additional deflection caused by a neck coil 50 through which the frame deflection current is passed. However, when we add the distortions of figures 3 and 4, the net result is a compensation of raster distortions up to approximately half way up or down the screen (since the inwardly (pin-cushion distortion) curved errors of lines 51 are counteracted by the outward curvature of lines 61, but at the edges the net result is a worsening of the line shape since the sum of the outwardly curvature of lines 61 at the top of figure 4 and the straight line of figure 3 is an outwardly curved line (barrel distortion).

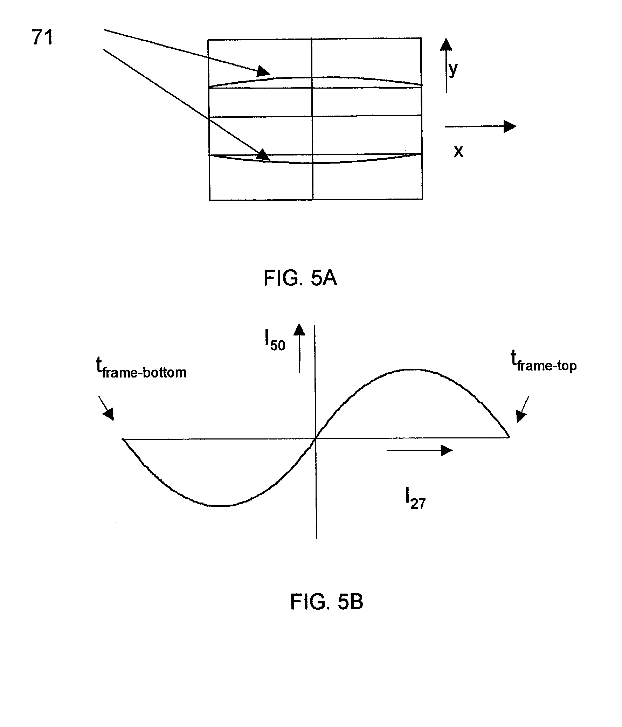

However, when the neck coil system is made inactive along the top and bottom edges of the screen, Fig. 4 changes into Fig. 5A. The effect shown in Fig. 5A is a north-south inner-barrel raster distortion, which is opposite of the north-south inner-pincushion raster distortion that of fig. 3. The needed current through the extra coil is only a function of the vertical deflection, but not a linear function. An appropriate current I₅₀ through the extra deflection coil, as a function of the frame current I₂₇ through the main deflection coil, is shown in Fig. 5B. The net result of the raster distortions of figure 3, wherein a deflection unit is provided generating such a deflection field that the lines are substantially straight (zero distortion) at the edges, but curved (inner-pincushion distortion) half way up the screen, and the raster distortions of figure 5A wherein the current through the neck coil 50 is such that the I₅₀ current, as a function of the frame deflection current, increases up to a maximum and then decreases to a minimum, which minimum is in this case zero, is that the raster distortion in toto are reduced, due to the counteracting raster distortions over substantially the whole of the screen.

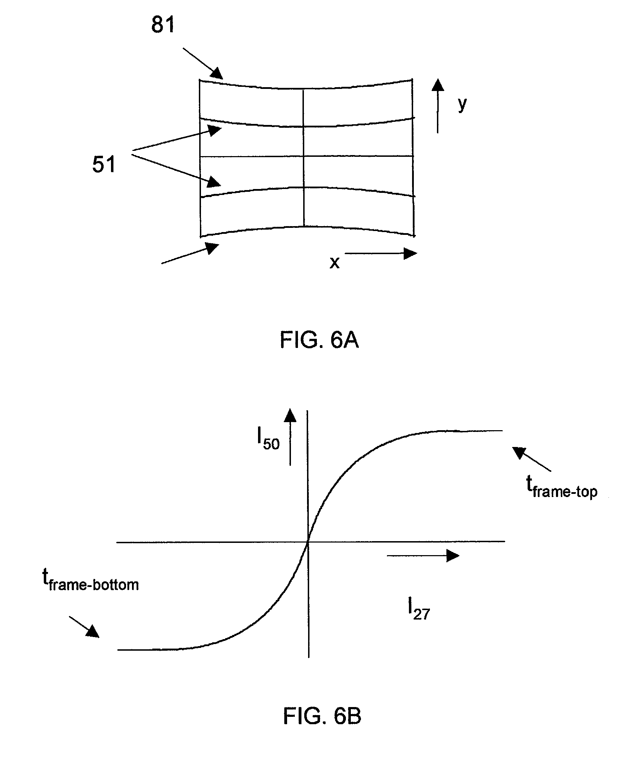

The designer of a deflection unit has some leeway in designing the deflection unit and the resulting raster distortions. Figure 6A gives another example of raster distortions. In this embodiment the raster distortions caused by the deflection unit increase as a function of vertical (frame) deflection wherein the raster distortions increase to a certain value and then level out, i.e. stay at approximately the same level. Instead of having a deflection unit that only has a north-south inner-pincushion distortion, in this embodiment the device comprises with a deflection unit that has an outer-pincushion distortion at the north south edge that is comparable to, e.g. only a little larger, than the pincushion halfway the vertical axis, as show in Figure 6A.

Expressed in mm of distortion, the inner-pincushion distortion is comparable to the edge-pincushion distortion. However, when expressing the distortions as a percentage of the vertical deflection, the inner-pincushion distortion is twice as large as the edge-pincushion distortion. For the correction of such a raster distortion, the current I₅₀ through coil system 50 should correspond to this dependency, i.e. be non-linear, thus also forming an embodiment of the device in accordance with the invention.

The current I₅₀ through the neck coil 50 as a function of the frame deflection current I₂₇ is now a function that starts of as a linear function rising to a maximum and then leveling out, and is shown in the next figure. In this example the I₅₀ curve as a function of I₂₇ is a smooth curve. Within the concept of the invention falls also e.g. a I₅₀ curve which follows a straight line to a maximum and then is kept constant for higher values of I₂₇.

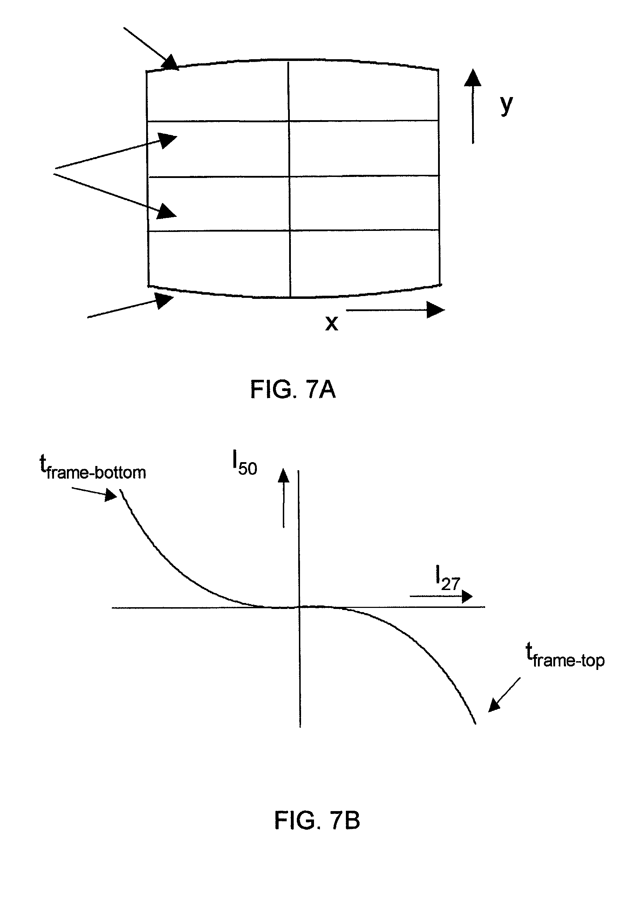

Yet an further embodiment is exemplified in figures 7A and 7B.

In this embodiment a deflection yoke is used for which there is no or hardly no north-south inner-pincushion raster distortion, but it suffers from a barrel distortion of the outer north-south raster, the raster distortions are schematically indicated in figure 7A.

In this case, the neck coil has to counter act the distortion of the main vertical deflection coil, but only or at least mainly at the top and bottom edges of the screen. The current function I₅₀ vs I₂₇ in this case is in figure 7B.

The preceding figures has illustrated various embodiments of the invention by means of figures showing raster distortions and I₅₀ vs I₂₇ relations.

The following figures illustrates various electronic arrangement by which the various I₅₀ vs I₂₇ relations may be obtained. Such embodiments are given as examples and, although they respresent, due to their simplicity preferred embodiments, should not be misinterpreted as to restrict the scope of protection to such embodiments.

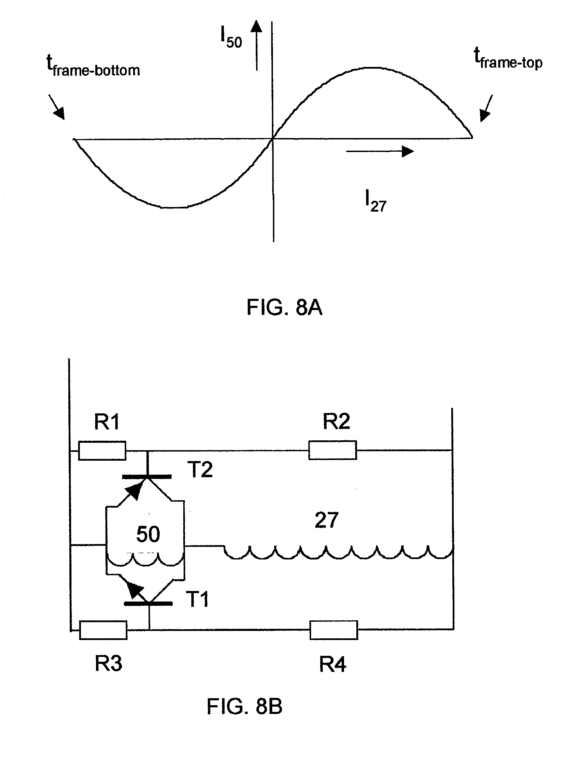

Figure 8A corresponds to figure 5B.
Figure 8B illustrates a circuit with for obtaining a I₅₀ vs I₂₇ relation as shown in figure 8A. The neck coil 50 is put in series with the frame coil 27. The resistors and the transistors provide for a current I₅₀ through coil 50 as a function of the current I₂₇ as schematically indicated in figure 8A.
Basically, the neck coil 50 is in series with the frame deflection coil 27 , and the neck coil 50 is being short-cut for larger currents through the main deflection coil. This circuit is using two transistors, but also two field effect transistors (FEDs) could be used. With the dimensioning of the resistor values the points can be chosen where the transistors start to short cut the extra coil. In fact it is the voltage across the deflection coil that determine the moment that short cut starts to occur. By choosing the resistors in the left trench of the circuit different from the resistors in the right trench of the circuit, compensation can be made for the inductive voltage across the main deflection coil.

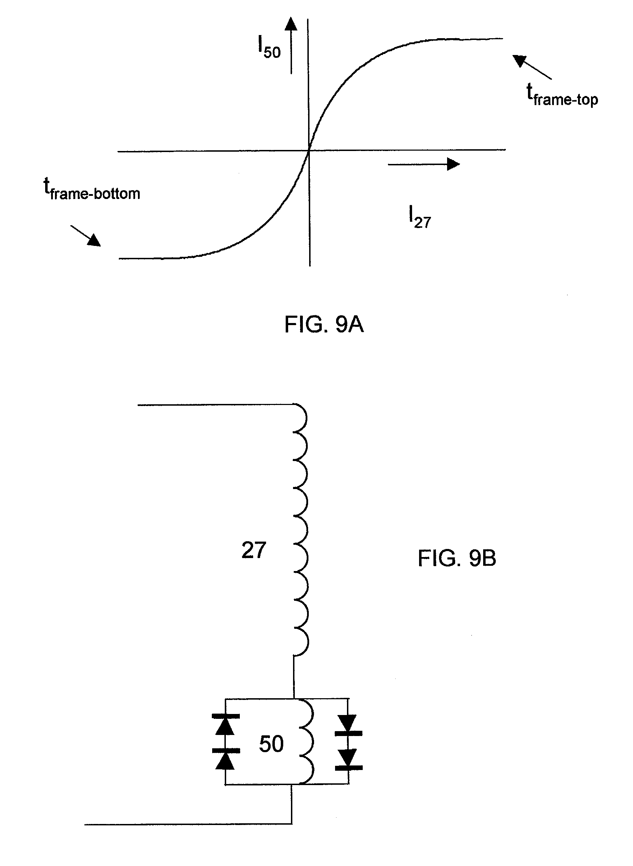

Figure 9A corresponds to figure 9B.
Figure 9B illustrates a circuit with for obtaining a I₅₀ vs I₂₇ relation as shown in figure 9A. The neck coil 50 is put in series with the frame coil 28. The diodes provide for a current I₅₀ through coil 50 as a function of the current I₂₇ as schematically indicated in figure 9A.
Again the neck coil 50 is in series with the frame deflection coil 27. By means of diodes, in which use is made of the so-called knee-voltage of the diodes, the maximum current through the neck coil 50 is limited. The number of diodes determines the maximum voltage across the correction coil (0.7 V per diode). It is possible to give the left trench of the circuit a different number of diodes than the right trench, to compensate for the inductive voltage over the extra coil.

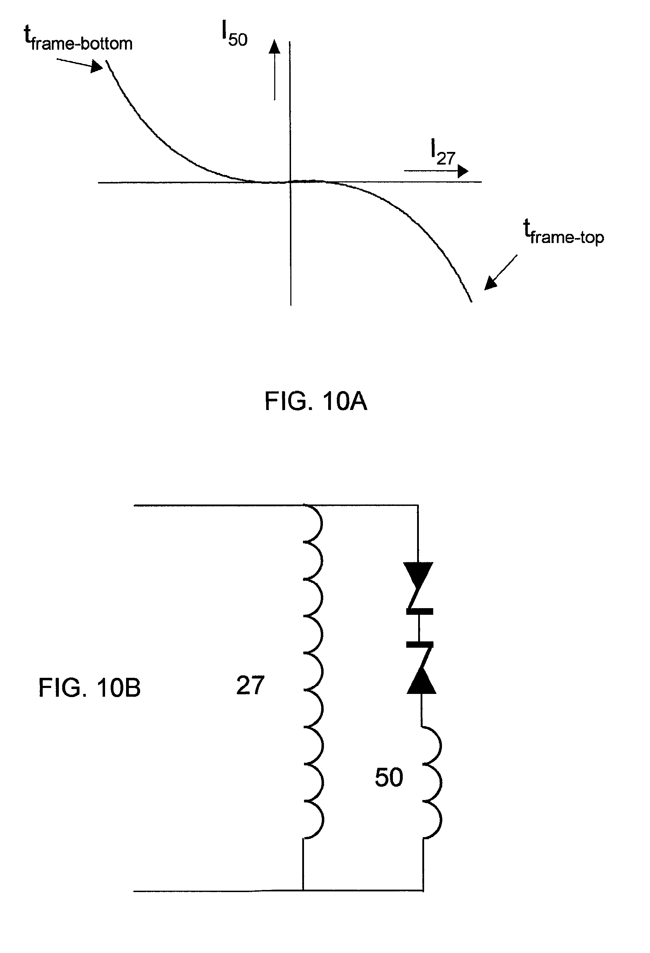

Figure 10A corresponds to figure 10B.
Figure 10B illustrates a circuit with for obtaining a I₅₀ vs I₂₇ relation as shown in figure 10A. In this circuit so called Zener diodes are used, that only start conducting once the so called Zener voltage across the diode is exceeded. The two Zener diodes can be given different voltage values to compensate for the inductive voltage across the main deflection coil. Limitation of this circuit is in the power dissipation in the Zener diodes because there may be a large voltage across them.

These are the simple exemplary diagrams of the circuits that can be used for correcting the north-south inner-pincushion raster distortion by means of an extra coil which only uses frame deflection currents.

### In short the invention can be described as follows:

A display tube has an envelope (10) comprising a neck (14). In the neck (14) there is an in-line electron gun (15). A deflection unit which is provided around the envelope (10) comprising a frame deflection coil system (27). The device comprises a neck coil system (50) situated around the neck (14) for generating a magnetic field comprising a dipolar field component for deflection of the electron beams (19, 20, 21) in a (y) direction transverse to the in-line plane, and means for supplying a current (I₅₀) to the neck coil system (50) which is a non-linear function of the frame deflection current (I₂₇) for reducing inner-pincushion raster distortion.

It is mentioned that, as stated before, when a horizontal line is vertically shifted by means of the neck coil system 50, this shifted line becomes curved due to the focusing effect of the line coil field.

It will be appreciated by persons skilled in the art that the present invention is not limited by what has been particularly shown and described hereinabove. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

## Claims

1. A device for displaying television pictures comprising a display tube having an envelope (10) comprising a neck (14) and a screen (23), in the neck (14) of which an in-line electron gun (15) is present for generating three electron beams (19, 20, 21) situated in an in-line plane, and comprising an electro-magnetic deflection unit which is provided around the envelope (10) of the display tube and comprises a first deflection coil system (26) for deflecting the beam in a (x) line direction and a second deflection coil system (27) for deflection the beam in a frame (y) direction transverse to the line (x) direction, the device comprising means (40) for supplying a line deflection current and a frame direction current to the first and second deflection coil system respectively, **characterized in that** the device comprises a neck coil system (50) situated around the neck (14) for generating a magnetic field comprising a dipolar field component for deflection of the electron beams (19, 20, 21) in a (y) direction transverse to the in-line plane, and means for supplying a current (I₅₀) to the neck coil system (50) which is a non-linear function of the frame deflection current (I₂₇) for reducing inner-pincushion raster distortion.

2. A device as claimed in claim 1, **characterized in that** that the deflection unit in operation generates lines wherein the curvature of the lines as a function of frame deflection initially increases and then decreases, and **in that** the means (40) for supplying the current through the neck coil system are arranged to supply a current (I₅₀) which, as a function of the frame deflection current (I₂₇), increases up to a maximum and then decreases to a minimum.

3. A device as claimed in claim 2, **characterized in that** the minimum is substantially zero.

4. A device as claimed in claim 1, **characterized in that** the deflection unit generates in operation lines wherein the curvature increases as a function of frame deflection levelling at a certain maximum and **in that** means for supplying the current through the neck coil system are arranged to supply a current which, as a function of the frame deflection current, increases up to a maximum and then levels.

5. A device as claimed in claim 1, **characterized in that** embodiment the deflection unit in operation generates lines wherein the curvature of the lines as a function of frame deflection increases first slowly and then increases more sharply, and the means for supplying the current through the neck coil system are arranged to supply a current which, as a function of the frame deflection current, remains substantially to a point or increase slowly to that point and then decreases more sharply to a maximum.

6. A device as claimed in claim 5, **characterized in that** the current (I₅₀) through the neck coil system (50) is substantially a third order function (I₂₇³) of the frame deflection current (I₂₇).

7. A cathode ray tube for a device as claimed in any of the preceding claims.
